# EUROPEAN PATENT SPECIFICATION

(11) **EP 4 369 585 B1**
(45) Date of publication and mention of the grant of the patent: **24.06.2026**
(21) Application number: 23193875.4
(22) Date of filing: 29.08.2023
(51) Int. Cl.: H02M 3/158, G06F 1/26, G06F 1/3296, G06F 1/20, G06F 1/28, G06F 1/3215, G06F 1/324, H02M 1/00, H02M 1/32, H02M 3/07

(54) **CURRENT EQUALIZATION AND RECONFIGURABLE DOUBLE CONTROL LOOP FOR VOLTAGE REGULATORS**
STROMAUSGLEICH UND REKONFIGURIERBARER DOPPELREGELKREIS FÜR SPANNUNGSREGLER
DOUBLE BOUCLE D'ÉGALISATION DE COURANT ET RECONFIGURABLE POUR RÉGULATEURS DE TENSION

(30) Priority: 09.11.2022 US 202217984183
(43) Date of publication of application: 15.05.2024
(73) Proprietor: INTEL Corporation, Santa Clara, CA 95054 (US)
(72) Inventor: BUTZEN, Nicolas, Portland 97229 (US); KRISHNAMURTHY, Harish, Beaverton 97006 (US); YU, Jingshu, Hillsboro (US)
(74) Representative: Viering, Jentschura & Partner mbB Patent- und Rechtsanwälte

(56) References cited:
- CN-B- 102 656 685
- US-A1- 2007 092 618
- US-A1- 2008 278 223
- US-A1- 2011 316 508
- US-A1- 2015 022 169
- US-A1- 2017 110 968
- US-A1- 2019 181 756
- US-A1- 2020 381 998
- US-A1- 2021 328 510
- US-B1- 11 462 988

## Description

### FIELD

The present application generally relates to an apparatus including a voltage regulator and a control circuit, and an integrated circuit package as set out in the appended set of claims.

### BACKGROUND

Voltage regulators are used in a computing system to supply power to the circuits of the system. One example of a voltage regulator is a DC-to-DC power converter such as buck converters. Buck converters are useful for tasks such as converting the main supply voltage of a computing device, such as 12 V, down to lower voltages, such as 5 V, 3.3 V or 1.8 V. The lower voltages can be used by various components in the computing device. However, various challenges are presented in operating the voltage regulators.

US 2015/022169 A1 discloses a method of controlling a switched capacitor voltage regulator, which includes modifying a topology factor associated with the switched capacitor voltage regulator in response to a change in output voltage associated with the switched capacitor voltage regulator, thereby maintaining an average output voltage associated with the switched capacitor voltage regulator. The method also includes modifying a loop delay associated with the switched capacitor voltage regulator in response to a change in operational frequency associated with the switched capacitor voltage regulator, thereby reducing ripple amplitude associated with the switched capacitor voltage regulator. A corresponding feedback/feed forward switched capacitor voltage regulator, controller, computer-readable medium, and voltage regulation system are also disclosed.

US 2011/316508 A1 discloses providing stabilization of a switching voltage regulator employing V2 control against ripple oscillation instability when the equivalent series resistance (ESR) of an output capacitor is small by providing both an external ramp and an internal ramp (only the latter of which requires an approximation of inductor current) in the control feedback path, preferably including both inner and outer feedback loops. Approximation of inductor current using such an arrangement is non-critical and may be estimated based on power input voltage. Drift of a circuit providing such an inductor current estimation is preferably avoided by adjusting control duty cycle or slew rate of the positive-going ramp portion of the estimated inductor current triangular waveform.

### SUMMARY

The invention pursued in the present application is set out in the appended set of claims.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
FIG. 1 depicts a block diagram of a comparative example circuit which includes a group of voltage regulators to provide power to a compute domain, according to various embodiments.
FIG. 2 depicts a block diagram of an example circuit which includes a group of voltage regulators to provide power to a compute domain, where the voltage regulators are independently controlled based on respective load conditions of each voltage regulator, according to various embodiments.
FIG. 3 depicts a block diagram of an example power delivery system including a control circuit and a voltage regulator, consistent with FIG. 2, according to various embodiments.
FIG. 4 depicts an example table of input/output pins of the digital controller 310 of FIG. 3, according to various embodiments.
FIG. 5A depicts an example of different ranges of a count, CNT1, obtained at the digital controller 310 of FIG. 3, based on the output CMT_RMP from CMP1 in FIG. 3, according to various embodiments.
FIG. 5B depicts an example plot of ΔVtarget versus ΔCNT1, consistent with FIG. 5A, according to various embodiments.
FIG. 6 depicts example plots of target voltage and load current (Iload) versus time, consistent with the circuit of FIG. 3, according to various embodiments.
FIG. 7 depicts example simulated waveforms of baseline single-loop regulation, double-loop regulation with adaptive voltage positioning (AVP) disabled, and double-loop regulation with AVP enabled, consistent with the circuit of FIG. 3, according to various embodiments.
FIG. 8 depicts a flowchart of an example process for use with the circuits of FIGs. 2 and 3, according to various embodiments.
FIG. 9 depicts a flowchart of an example process for use with the circuit of FIG. 3, according to various embodiments.
FIG. 10 illustrates an example of components that may be present in a computing system 1050 for implementing the techniques (e.g., operations, processes, methods, and methodologies) described herein.

### DETAILED DESCRIPTION

As mentioned at the outset, various challenges are presented in operating voltage regulators (VRs) in a computing system.

In one approach, multiple capacitive VRs are combined or ganged together to provide power to a large power domain, also referred to as a compute domain. A control loop is used to regulate the output voltage of the VRs to a target voltage.

However, one potential problem which may occur relates to uneven distribution of the total load power among the several VRs. This can result in reduced efficiency and reliability, temperature hotspots, and so on.

In one possible solution, an apparatus includes a group of voltage regulators to power a compute domain and a control circuit coupled to the group of voltage regulators. The control circuit is to set an initial configuration of each voltage regulator, to detect an increase in a load for one or more of the voltage regulators and based on the detection of the increase in the load, adjust the one or more voltage regulators. For example, the initial configuration can include a reference clock frequency and/or a voltage identification definition (VID) (which sets a target voltage output of a VR). To detect the increase in the load, the control circuit can, e.g., detect an increase in a temperature, a local current sensor output and/or a local switching frequency (toggle rate). To adjust the one or more voltage regulators, the control circuit can, e.g., adjust (decrease) a reference clock frequency and/or a voltage identification definition. The control circuit can adjust each voltage regulator of the group of voltage regulators independently, and the adjusting of the one or more VRs can equalize the loads of the VRs, within a tolerance.

For example, an existing Power Management Unit (PMU) infrastructure that is already in place in some computing devices can be used to provide the VRs with the necessary configure bits as well as clock reference and voltage code information (referred to as VID), and in turn receive information from the VRs such as load current, switching frequency, temperature, and so on. The information can be used to make small changes to the clock reference and VID to equalize the load among several VRs.

An advantage is that a more equal distribution of the total load current among the several VRs is achieved, while using existing infrastructure and thus limiting cost overhead.

Another potential problem in operating one or more VRs is that the controller can be destabilized if the load is not placed close to the VR, due to the additional parasitics from metal traces and so on in the sense path. This destabilization can occur, e.g., in capacitor VRs which are regulated using pulse skipping modulation (PSM), sometimes also referred to as bang-bang control or lower-bound hysteretic control, where this type of regulation is usually stable.

One option is to regulate the output voltage in the capacitive VRs using a single sense loop. This can be implemented using a purely local loop (e.g., local to the VR itself and not including the load) to sense and regulate the on-die output voltage, or by regulating the actual remote output voltage with an analog or high-speed digital compensator. However, both regulation methods have disadvantages. For example, the purely local loop regulation can only maintain the output voltage close to the VR at its target value. The voltage drop lost on the parasitics, due to bonding, packages and printed circuit board (PCB), are not considered. The actual output voltage is inevitably lower than the users' expected value and is unpredictable in different testing setups and load conditions. Additionally, single loop regulation requires delicate designs for the compensation circuit when parasitics exist in the feedback loop, especially when the VR is operating at high speed. Such design normally takes a large layout area and/or large power consumption to meet the high-speed and accuracy requirements.

In one possible solution, an apparatus includes a voltage regulator and a control circuit coupled to the voltage regulator, wherein the control circuit is to set a target voltage of the voltage regulator, to adjust a switching frequency of the voltage regulator based on a difference between the target voltage and an output voltage of the voltage regulator, to monitor a load of the voltage regulator and to adjust the target voltage based on a change in the load. The control circuit can adjust the switching frequency of the voltage regulator in a first control loop and adjust the target voltage in a second control loop which is decoupled from the first control loop, wherein a clock rate of the first control loop is greater than a clock rate of the second control loop.

For example, a reconfigurable double-control-loop regulator can be provided for the capacitive VRs. The two decoupled regulation loops, which include an inner local sense loop and an outer remote sense loop, ensure the actual output voltage of the VR is always regulated to its target value, regardless of the existence of package parasitics. In addition, an adaptive voltage positioning (AVP) feature is implemented with a programmable artificial load line. AVP allows the output voltage to shift between the pre-set limits, by setting an artificial load line so that the target output voltage value is adjusted based on the output current condition.

A number of advantages can be achieved. First, double-loop regulation ensures that the actual output voltage near the load domain is always regulated to the target value, regardless of the parasitic resistance/inductance from on-die/package/board routing. The additional remote sense loop can dynamically adjust the reference voltage for the local sense loop, so that the voltage drop on the parasitics is well-compensated. Second, the two regulation loops are decoupled from each other and can operate at different speeds, which saves the on-die controller area, allows loose requirements for analog circuits, eliminates the need for a high-bandwidth analog-to-digital converter (ADC), improves the stability of the system with the existence of parasitics, and so forth. Third, the double-loop architecture also allows for easily including additional features such as AVP, where these additional features are decoupled from the main regulation loop. Fourth, the double-loop regulation methodology can not only be used in a continuous capacitive VR, but can also be applied to other integrated VR designs.

The above and other advantages will be further apparent in view of the following discussion.

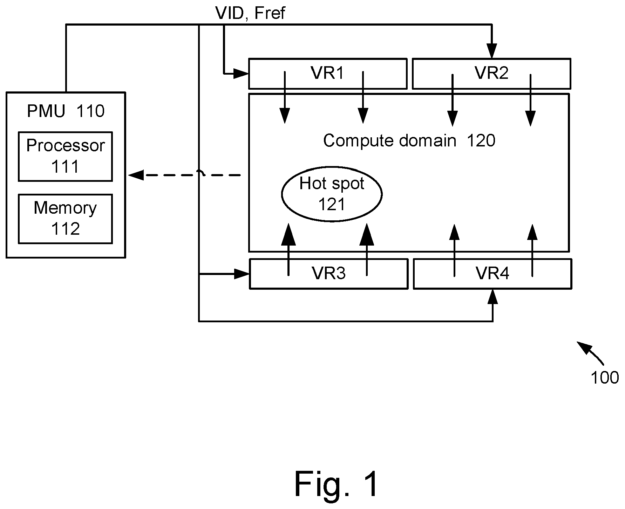

FIG. 1 depicts a block diagram of a comparative example circuit which includes a group of voltage regulators to provide power to a compute domain, according to various embodiments. The circuit 100 includes a Power Management Unit (PMU) 110 as an example of a control circuit to control a group of voltages regulators, VR1-VR4. A PMU can be, e.g., a microcontroller that governs the power functions of a digital platform. It can include various components such as firmware and software, a processor 111 such as a central processing unit (CPU), memory 112, input/output functions, timers to measure intervals of time, analog-to-digital converters (ADCs) and digital-to-analog converters (DACs). The memory can store instructions, e.g., firmware and/or software, which is executed by the processor to perform the functions described herein. A PMU controls the power states of one or more compute domains.

This example includes four VRs which provide power to a compute domain 120 of a computing device. The compute domain refers to, e.g., various circuits which are used in the computing device, including circuits which perform computations. The compute domain is an example of a power domain. The VRs can be tied together, or ganged, and feed their respective power outputs into a combined power output. One benefit to this approach is that multiple smaller VRs can be used instead of one very large VR. Additionally, the VRs can be positioned at different locations relative to the compute domain so that the power of each VR will tend to be consumed by the circuits which are closest to it. Also, a deficiency in one VR can be potentially compensated for by the other VRs.

The PMU, as a centralized control circuit, provides a voltage identification definition (VID) or other type of configure bits and reference frequency/clock (Fref) to configure each VR. The voltage set point, or target voltage, of a VR is set by the VID. The VID comprises a number of bits and is communicated by the PMU to the VRs at a startup of the computing device and potentially at other times as well. The relationship between the VID and the target voltage may be non-linear such that each single bit change in the VID can result in different changes to the target voltage. Fref refers to a switching frequency or reference clock frequency of the VR, e.g., the rate at which it transfers charge from an input to an output. Typically, the PMU provides a VID or other configure bits and reference frequency/clock to each VR. In return, the VRs might feed information back to the PMU such as a local current sensor output or temperature reading, as indicated by the dashed line arrow.

Generally, the load current may be equally distributed among multiple VRs if the load current is spatially evenly distributed over the compute domain. However, in this example, the compute domain includes a hot spot 121, which is an area which is consuming a relatively high amount of power/current, compared to the amount of power/current consumed by other areas of the compute domain. For example, there may be circuits in the hot spot which are experiencing relatively high usage. A spatial hot spot may consume most of the total load power of the domain.

VR3 is the closest VR to the hot spot and will therefore start supplying additional current to the hot spot. The amount of current supplied by VR3 can become significantly greater than the amount of current supplied by the other VRs. This increased current is depicted by the large arrows extending from VR3 into the compute domain. VR3 might therefore be subject to faster degradation, in part due to elevated temperatures and currents. The degradation of the VR may, in turn, negatively impact the lifetime of the entire computing device. Thus, it would be desirable to equalize the current among the several VRs.

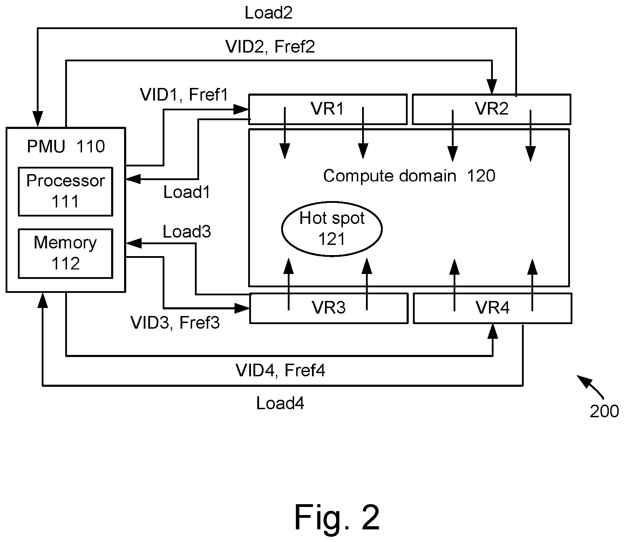

FIG. 2 depicts a block diagram of an example circuit which includes a group of voltage regulators to provide power to a compute domain, where the voltage regulators are independently controlled based on respective load conditions of each voltage regulator, according to various embodiments. The PMU 110, VRs, computer domain 120 and hot spot 121 of FIG. 1 are repeated. In this example, each VR is controlled independently or separately from the other VRs based on respective feedback information it provides to the PMU. For example, the PMU can provide different values of VID and Fref to each VR. In particular, the PMU provides VID1 and Fref1 to VR1, VID2 and Fref2 to VR2, VID3 and Fref3 to VR3, and VID4 and Fref4 to VR4, where VID and/or Fref can be different for different VRs. In one example, VR1 is configured with VID+ΔV1 and Fref, VR2 is configured with VID+ΔV2 and Fref, VR3 is configured with VID and Fref-ΔF1, and VR1 is configured with VID+ΔV4. With this approach, the current output of the VRs can be equalized. For VR3, which is feeding current to the hot spot, the VID and/or Fref can be reduced relative to an initial or previous configuration to reduce the target voltage and therefore the current, bring the current back in line the current output of the other VRs.

The information that the VRs feed back to the PMU can be used to make slight adjustments to the VRs in an attempt to equalize the current they provide.

When there are multiple independently-controlled VRs powering the same domain, and assuming there are no spatial hot spots on the domain, the current that a single VR provides depends on its VID and reference frequency relative to the VIDs and reference frequencies of the other VRs.

A higher VID naturally makes the VR increase its output current until its local sense point voltage matches that increased VID. While a very small VID offset, e.g., one least significant bit (LSB), could only push the VR current slightly higher, going even slightly beyond that (e.g., five LSBs) can push any VR to take on the full load current, provided it is sized to handle that load condition. In other words, the relationship between the VID and the output current is highly non-linear.

On the other hand, increasing the reference frequency increases the number of sample events that the VR's comparator will have in a given period, and this increases the likelihood of it switching roughly proportionally. Thus, frequency is a more linear knob to adjust a VR's output current. Although, frequency only has an effect if the voltage difference between the several sense points is smaller than the typical voltage ripple on the voltage domain.

With the techniques and apparatuses provided herein, the PMU can consider the reported load current and/or temperatures of the different VRs. If any VR exceeds a certain current relative to the other VRs and/or a certain temperature threshold, the PMU can apply a small positive VID offset to the VRs with more current/temperature overhead, and/or remove a positive VID offset of the VR in question. Alternatively, a negative reference clock offset to the VR in question can be applied, or a similar offset can be removed from VRs that supply less current. In doing this, the VR itself will supply less current, while the others will supply more. This process can be repeated as necessary to equalize the output currents of the VRs, e.g., equal within a tolerance of up to +/-10%, for example.

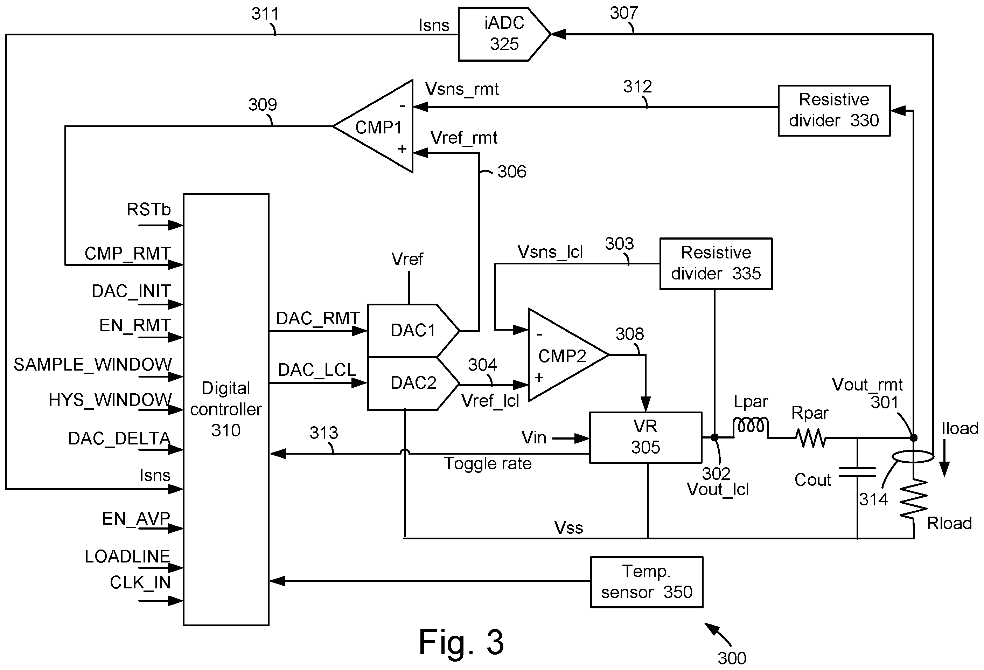

FIG. 3 depicts a block diagram of an example power delivery system including a control circuit and a voltage regulator, consistent with FIG. 2, according to various embodiments. The system 300 includes a digital controller 310 such as the PMU 110, which receives a number of inputs and, in response to the inputs, provides outputs DAC_RMT and DAC_LCL to DAC1 and DAC2, respectively, where DAC denotes digital-to-analog converter. LCL denotes local, indicating a value associated with the VR, and RMT denotes remote, indicating a value remote from the VR and associated with the load. DAC_RMT and DAC_LCL are commands for DAC1 and DAC2, respectively, to output voltages Vref_rmt and Vref_lcl, respectively. Vref_lcl is a target or local reference voltage which is the desired voltage output of a VR 305. Vref_lcl is provided to a non-inverting input of a comparator, CMP2, via a path 304. A voltage Vsns_lcl on a path 303 is provided to an inverting input of CMP2. Vsns_lcl is a divided version of the output voltage of the VR, Vout_lcl, due to the resistive divider 335. CMP2 compares the two inputs and decides whether to switch the VR. If the output voltage as represented by Vsns_lcl falls below the reference voltage, Vref_lcl, the output of CMP2 on a path 308 instructs the VR to switch. If Vsns_lcl≥Vref_lcl, the output of CMP2 does not instruct the VR to switch. When the VR switches, it transfers charge from an input voltage, Vin, to the output node 302. This effectively modulates the switching frequency to ensure the local output voltage, Vout_lcl, stays above the reference voltage, Vref_lcl.

On a path 312, Vsns_rmt is a divided version of Vout_rmt due to the resistive divider 330. Vsns_rmt is representative of Vout_rmt. Vsns_rmt is compared to Vref_rmt on a path 306 at CMP1. Vsns_rmt is provided to an inverting input of CMP1 and Vref_rmt is provided to a non-inverting input of CMP1. The comparator CMP1 increments a count at the digital controller each time Vsns_rmt>Vref_rmt in a time period referred to as a sample window. The count is obtained based on the output, CMP_RMT, which is provided on a path 309 to the digital controller.

On a path 307, Iload is digitized by a current ADC (iADC) 325 to provide a digital representation of the current, Isns, on a path 311, for use by the digital controller. Isns is representative of Iload. Iload can be measured by a current sensor 314, for example.

A temperature sensor 350 which is located near the VR can provide a signal indicating the local temperature to the digital controller.

The VR 305 can also provide its toggle rate, e.g., switching frequency, to the digital controller on a path 313 for use, e.g., detecting a load and/or an increase in the load of the VR.

The system includes double-control-loop regulation for the VR 305, which in this example is a capacitive voltage regulator. The existence of parasitic resistance and inductance is represented by a resistor and inductor, Rpar and Lpar, respectively. The parasitic resistance and inductance are from the on-die metal routing and packaging, and inevitably lead to a voltage drop from the local output node 302 to the remote output node 301. The system can regulate the actual Vout_rmt on the output node 301 regardless of the parasitics mentioned above by using two sense/control loops. The inner control loop (also referred to as a local sense loop or a first control loop) monitors the local output voltage, Vout_lcl, at the node 302, and compares its sense voltage, Vsns_lcl, on the path 303 with Vref_lcl on the path 304. The inner sense loop includes the digital controller, DAC2, CMP2, the VR 305 and the resistive divider 335.

The outer control loop (also referred to as a remote sense loop or a second control loop) monitors the remote output voltage, Vout_rmt, and compares a corresponding sense voltage, Vsns_rmt, on the path 312, with Vref_rmt on the path 306. The outer sense loop includes the digital controller, DAC1, CMP1, the VR 305 and the resistive divider 330.

The remote sense regulation in the outer loop is optional and can be disabled by the controller. In addition, a technique referred to as adaptive voltage positioning (AVP) can be implemented in this design. AVP is a technique for reducing voltage spikes due to changes in current. In one approach, it includes setting the output voltage level so that it is slightly higher than the minimum value at full current load, and a little lower than the maximum value at light current load.

The load current, Iload, is detected on a path 307, translated into an M-bit value, Isns, where M≥2, by a current ADC (iADC) 325 and then fed back into the digital controller.

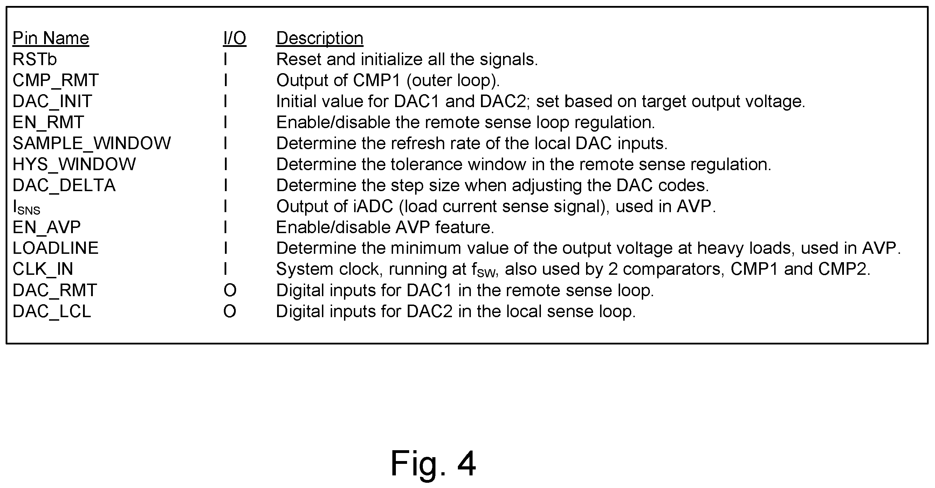

FIG. 4 depicts an example table of input/output pins of the digital controller 310 of FIG. 3, according to various embodiments. The digital controller utilizes a number of inputs to regulate VOUT_RMT and VOUT_LCL to their target values. The two N-bit inputs, DAC_RMT and DAC_LCL, are dynamically adjusted based on the current operating conditions including, e.g., Vsns_rmt, Vsns_lcl, Isns, the enabling status of AVP, etc. In this design, CMP1 and CMP2 are two clocked comparators using the system clock toggling at a frequency referred to as fSW.

The inputs to the digital controller include: RSTb, which resets and initializes all the signals; CMP_RMT, which is an output of CMP1 (outer loop); DAC_INIT, which is an initial value for DAC1 and DAC2, and is set based on the target output voltage; EN_RMT, which is an enable/disable signal for the remote sense loop regulation; SAMPLE_WINDOW, which determines the refresh rate of the local DAC inputs; HYS_WINDOW, which determines the tolerance window in the remote sense regulation; DAC_DELTA, which determines the step size when adjusting the DAC codes; Isns, which is an output of iADC (it is a load current sense signal), used in AVP; EN_AVP, which enables/disables the AVP feature; LOADLINE, which determines the minimum value of the output voltage at heavy loads, and is used in AVP; and CLK_IN, which is a system clock, running at fSW, and is also used by the two comparators, CMP1 and CMP2. Temperature can also be provided as an additional input to the digital controller. An increase in temperature is associated with an increased load for a VR.

The outputs of the digital controller include: DAC_RMT, which is the digital input or command for DAC1 in the remote sense loop; and DAC_LCL, which is the digital input or command for DAC2 in the local sense loop.

In one approach, the inner loop regulation is always enabled. The output of CMP2 is directly connected to a local clock generator inside the VR. Therefore, the inner loop is regulating at relatively fast clock frequency, fSW.

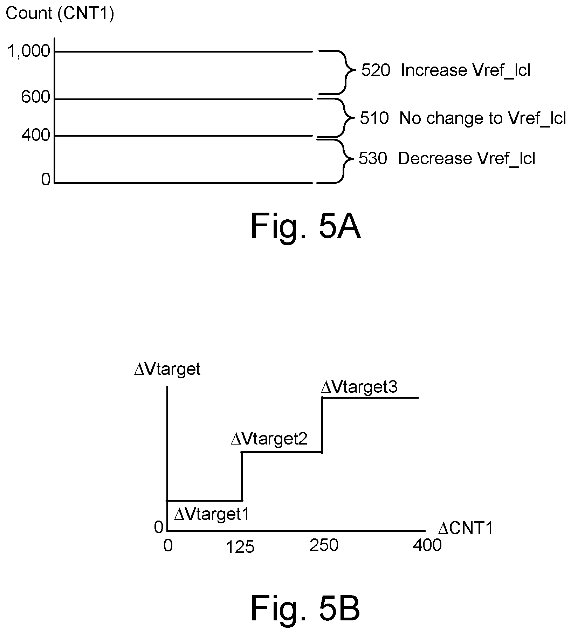

The remote sense regulation, on the other hand, is operating at slower speed/frequency. The digital controller continuously counts the number of positive edges (CNT1) of CMP_RMT within a sampling cycle, which is set by SAMPLE_WINDOW. The tolerance window, [Lower Limit, Upper Limit], is decided by HYS_WINDOW. Assume AVP mode is disabled here, DAC_RMT remains at its initial value DAC_INIT. There are three possible scenarios, in one approach, depicted in FIG. 5A.

FIG. 5A depicts an example of different ranges of a count, CNT1, obtained at the digital controller 310 of FIG. 3, based on the output CMT_RMP from CMP1 in FIG. 3, according to various embodiments. A range 510 represents the tolerance window, which is this example extends from 400 to 600 counts. A range 520 is above the tolerance window and extends from 601-1000. A range 530 is above the tolerance window and extends from 0-399. The lower and upper limits of the tolerance window are 400 and 600, respectively.

First, if Lower Limit ≤ CNT1 ≤ Upper Limit, it means the average value of Vsns_rmt is close to Vref_rmt, implying Vout_rmt and Vout_lcl are well regulated at their target values. Thus, DAC_LCL keeps its current value in the next sampling cycle.

Second, if CNT1 > Upper Limit, it means the average value of Vsns_rmt is less than Vref_rmt, implying Vout_rmt and Vout_lcl need to be increased. Therefore, the digital controller will increase DAC_LCL in the next sampling cycle.

Third, if CNT1 < Lower Limit, it means the average value of Vsns_rmt is greater than Vref_rmt, implying Vout_rmt and Vout_lcl need to be decreased. In a similar manner, the controller will reduce DAC_LCL in the next sampling cycle.

The count is outside the tolerance window when it is above or below the window. In one approach, the control circuit is to adjust the target voltage by an amount which is based on an amount by which the count exceeds the tolerance window, such as depicted in FIG. 5B. FIG. 5B depicts an example plot of ΔVtarget versus ΔCNT1, consistent with FIG. 5A, according to various embodiments. ΔCNT1 represents an amount by which CNT1 exceeds or falls below the tolerance window. For example, if the tolerance window is 400-600 counts as in FIG. 5A, CNT1=800, for example, would corresponds to ΔCNT1=200. ΔVtarget represents a change in target voltage, e.g., in V, and this can be correlated with a change in VID, for example. It is also possible to provide a similar plot for a change in Fref versus ΔCNT1. In this example, ΔVtarget=ΔVtarget1 when ΔCNT1 is between 0 and 125 (or when CNT1 is between 600 and 725), ΔVtarget=ΔVtarget2 when ΔCNT1 is between 125 and 250 (or when CNT1 is between 725 and 850), and ΔVtarget=ΔVtarget3 when ΔCNT1 is between 250 and 400 (or when CNT1 is between 850 and 1000). ΔVtarget increases as ΔCNT1 and CNT1 increase, so that ΔVtarget1<ΔVtarget2<ΔVtarget3. ΔVtarget can increase by progressively larger amounts as ΔCNT1 becomes progressively larger.

ΔVtarget could also decrease by an increasing magnitude as CNT1 falls further below the tolerance window.

In one approach, Vtarget is adjusted, e.g., reduced, when the count exceeds the tolerance window but not when the count is below the tolerance window, as the former case is indicative of a current hot spot in the compute domain and the corresponding likelihood of excessive stress on the VR.

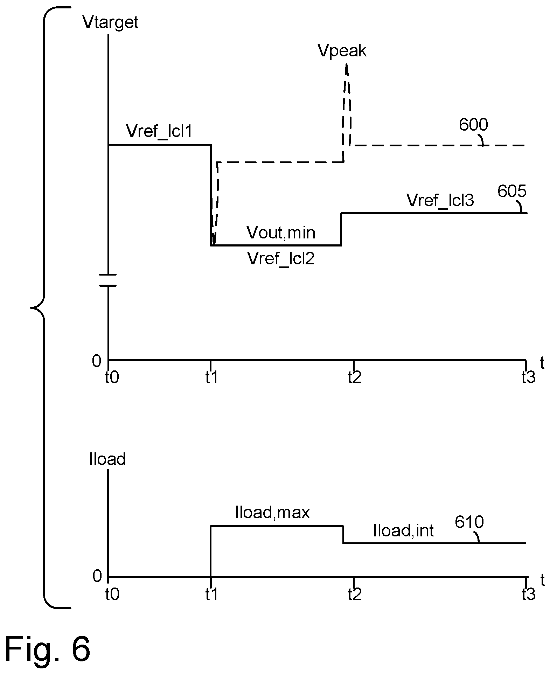

FIG. 6 depicts example plots of target voltage and load current (Iload) versus time, consistent with the circuit of FIG. 3, according to various embodiments. The time axis includes example time points t0-t3. Plot 600 represents the case of AVP disabled and plot 605 represents the case of AVP enabled. These plots represent a target voltage of a VR. Plot 610 denotes a load current of the VR.

For the case of AVP disabled, the target voltage is initially a first voltage, Vref_lcl1, from t0-t1. At this time, Iload=0 A or close to 0 A. At t1, Iload increases to Iload,max. Vtarget decreases briefly to Vout,min at t1, in a down spike, then increases back to a level which is close to, and slightly below, Vref_lcl1. In this case, the control attempts to keep the voltage at the initial target even though there is a heavy current load. As mentioned, this can result in reliability issues as the VR becomes stressed. At t2, Iload decreases to an intermediate level, Iload,int. In response, Vtarget increases briefly in an up spike to a peak level, Vpeak, then returns to the level of Vref_lcl1.

For the case of AVP enabled, when Iload increases to Iload,max, Vtarget is decreased to Vout,min, corresponding to Vref_lcl2, and remains at this level until t2. When Iload decreases slightly at t2, Vtarget increases slightly to Vref_lcl3. Vref_lcl1, Vref_lcl2 and Vref_lcl3 are first, second and third target voltages, respectively, which are set by the controller. Note that the hot spot components in the compute domain which are consuming a high load current can potentially draw more power from other VRs to maintain their performance if the output of the closest VR is reduced by reducing the target voltage.

In this case, the output voltage is allowed to shift to a lower value at heavy loads with an artificial load line (LL), and the two DAC inputs will be further adjusted based on the output current Iload. An artificial load line can be implemented by lowering the output of the VR in proportion to the measured output current using a controller, thus acting as if there was some resistance at the VR output.

The LL used in AVP can be calculated by the following equation, where Vout,min is the minimum allowed output voltage when the system is conducting a maximum load current Iload,max.: LL=(Vtarget-Vout,min)/Iload,max.

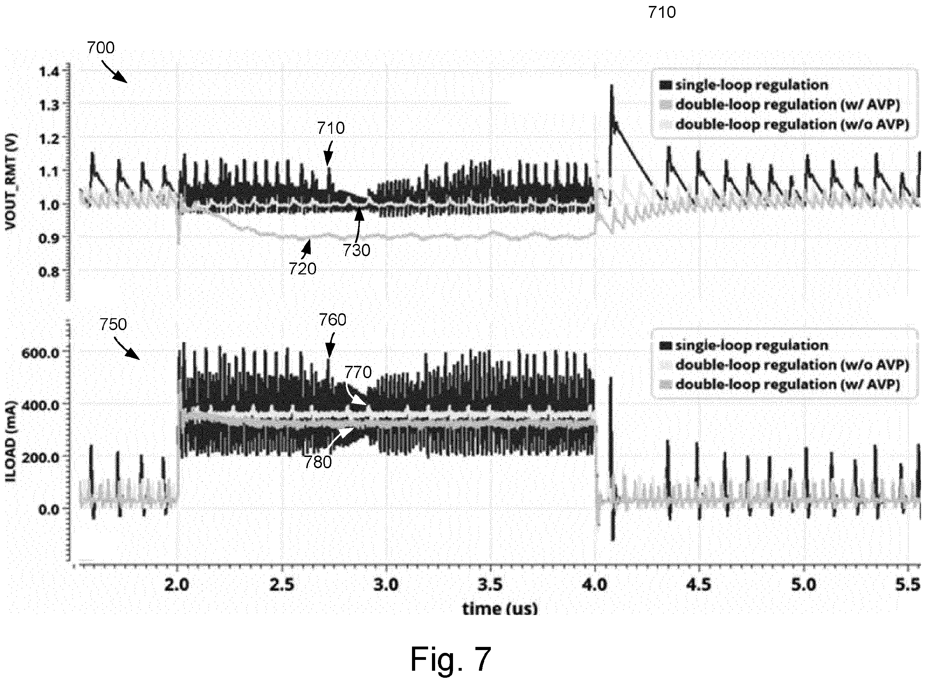

FIG. 7 depicts example simulated waveforms of baseline single-loop regulation, double-loop regulation with adaptive voltage positioning (AVP) disabled, and double-loop regulation with AVP enabled, consistent with the circuit of FIG. 3, according to various embodiments. The top graph 700 depicts VOUT_RMT (V) versus time (µsec.) and includes a plot 710 for single-loop regulation, a plot 720 for double-loop regulation with AVP and a plot 730 for double-loop regulation without AVP. The target voltage is 1 V with a +/-10% tolerance. The bottom graph 750 depicts ILOAD (mA) versus time (µsec.) and includes a plot 760 for single-loop regulation, a plot 770 for double-loop regulation with AVP and a plot 780 for double-loop regulation without AVP. ILOAD is 1 mA when time<2.0 µsec., 350 mA (Iload,max) when 2.0 µsec.≤time≤4.0 µsec., and 1 mA when time>4.0 µsec.

An advantage of the techniques and apparatuses disclosed herein is illustrated by these simulated waveforms. The remote output voltage (Vout_rmt) and the load current (ILOAD) waveforms with and without AVP are compared to a baseline single-loop-regulation, while ILOAD is changing between its minimum and maximum value. The plots clearly show that the system stability is greatly enhanced by reducing the peak-to-peak voltage from 150 mV (plot 710) to 23 mV (plot 720) and 15 mV (plot 730), and the peak-to-peak current is reduced from 397 mA (plot 760) to 49 mA (plot 770) and 31 mA (plot 780) at Iload,max. In addition, the smaller voltage and current ripples help to improve the system efficiency by 20% at Iload,max.

All the mentioned features, e.g., double/single sense loop, disabled/enabled AVP mode, and their related specifications, e.g., the refresh rate of the DAC inputs, tolerance of output voltage value, and the resolution of LL in AVP mode, are flexibly reconfigurable. Moreover, the techniques invention can not only be used in the VR to enhance the system stability and performance, but can also be easily utilized in other integrated voltage regulator (IVR) systems.

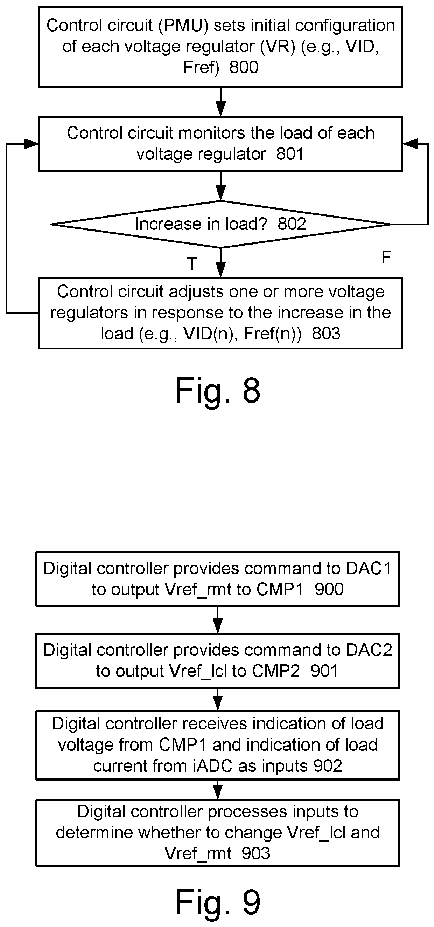

FIG. 8 depicts a flowchart of an example process for use with the circuits of FIGs. 2 and 3, according to various embodiments. At step 800, a control circuit such as the PMU sets an initial configuration of each voltage regulator, e.g., by setting VID and Fref. The initial configuration can be the same for each VR, in one approach. At step 801, the control circuit monitors the load of each voltage regulator. A decision step 802 determines whether there is an increase in the load. If the decision step is true (T), step 803 is reached, where the control circuit adjusts one or more voltage regulators in response to the increase in the load (e.g., by setting VID(n) and/or Fref(n), where n is the index of each VR). If the decision step 802 is false (F), step 801 is repeated.

FIG. 9 depicts a flowchart of an example process for use with the circuit of FIG. 3, according to various embodiments. At step 900, the digital controller provides a command to DAC1 to output Vref_rmt to CMP1. At step 901, the digital controller provides a command to DAC2 to output Vref_lcl to CMP2. At step 902, the digital controller receives an indication of load voltage from CMP1 and an indication of load current from iADC as inputs. At step 903, the digital controller processes the inputs to determine whether to change Vref_lcl and Vref_rmt.

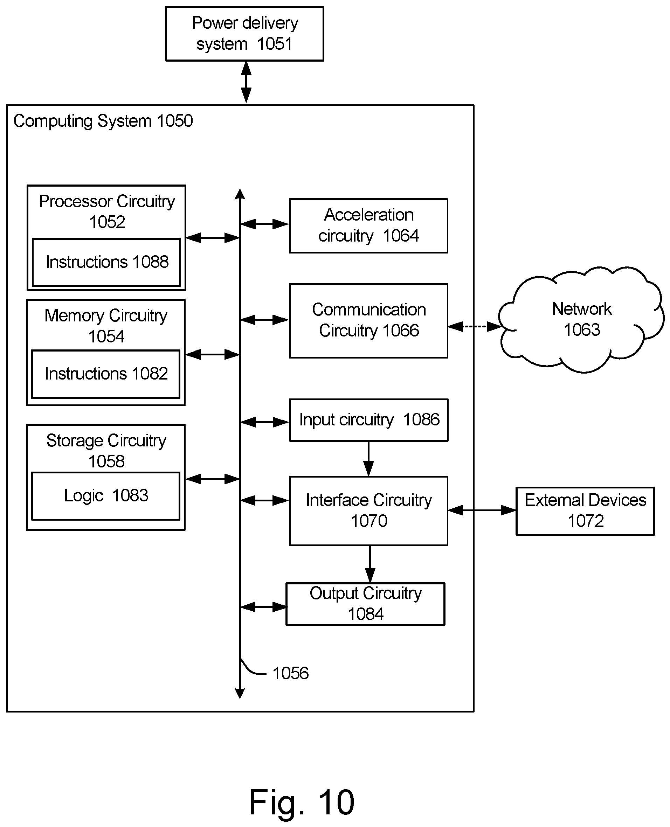

FIG. 10 illustrates an example of components that may be present in a computing system 1050 for implementing the techniques (e.g., operations, processes, methods, and methodologies) described herein. The system of FIG. 3 can be located in a power delivery system 1051 which provides power to one or more other components of the computing system

The computing system 1050 may include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 1050, or as components otherwise incorporated within a chassis of a larger system. For one embodiment, at least one processor 1052 may be packaged together with computational logic 1082 and configured to practice aspects of various example embodiments described herein to form a System in Package (SiP) or a System on Chip (SoC).

The system 1050 includes processor circuitry in the form of one or more processors 1052. The processor circuitry 1052 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 1052 may include one or more hardware accelerators (e.g., same or similar to acceleration circuitry 1064), which may be microprocessors, programmable processing devices (e.g., FPGA, ASIC, etc.), or the like. The one or more accelerators may include, for example, computer vision and/or deep learning accelerators. In some implementations, the processor circuitry 1052 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 1052 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low voltage processor, an embedded processor, or any other known processing elements, or any suitable combination thereof. The processors (or cores) 1052 may be coupled with or may include memory/storage and may be configured to execute instructions stored in the memory/storage to enable various applications or operating systems to run on the platform 1050. The processors (or cores) 1052 is configured to operate application software to provide a specific service to a user of the platform 1050. In some embodiments, the processor(s) 1052 may be a special-purpose processor(s)/controller(s) configured (or configurable) to operate according to the various embodiments herein.

As examples, the processor(s) 1052 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 1052 may be a part of a system on a chip (SoC), System-in-Package (SiP), a multi-chip package (MCP), and/or the like, in which the processor(s) 1052 and other components are formed into a single integrated circuit, or a single package, such as the Edison^{™} or Galileo^{™} SoC boards from Intel^{®} Corporation. Other examples of the processor(s) 1052 are mentioned elsewhere in the present disclosure.

The system 1050 may include or be coupled to acceleration circuitry 1064, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 1064 may comprise logic blocks or logic fabric and other interconnected resources that may be programmed (configured) to perform various functions, such as the procedures, methods, functions, etc. of the various embodiments discussed herein. In such implementations, the acceleration circuitry 1064 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 1052 and/or acceleration circuitry 1064 may include hardware elements specifically tailored for machine learning and/or artificial intelligence (AI) functionality. In these implementations, the processor circuitry 1052 and/or acceleration circuitry 1064 may be, or may include, an AI engine chip that can run many different kinds of AI instruction sets once loaded with the appropriate weightings and training code. Additionally or alternatively, the processor circuitry 1052 and/or acceleration circuitry 1064 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 1052 and/or acceleration circuitry 1064 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin 970 provided by Huawei^{®}, and/or the like. In some hardware-based implementations, individual subsystems of system 1050 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 1050 also includes system memory 1054. Any number of memory devices may be used to provide for a given amount of system memory. As examples, the memory 1054 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory 1054 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 1054 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 1058 provides persistent storage of information such as data, applications, operating systems and so forth. In an example, the storage 1058 may be implemented via a solid-state disk drive (SSDD) and/or high-speed electrically erasable memory (commonly referred to as "flash memory"). Other devices that may be used for the storage 1058 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 1054 and/or storage circuitry 1058 may also incorporate three-dimensional (3D) cross-point (XPOINT) memories from Intel^{®} and Micron^{®}.

The memory circuitry 1054 and/or storage circuitry 1058 is/are configured to store computational logic 1083 in the form of software, firmware, microcode, or hardware-level instructions to implement the techniques described herein. The computational logic 1083 may be employed to store working copies and/or permanent copies of programming instructions, or data to create the programming instructions, for the operation of various components of system 1050 (e.g., drivers, libraries, application programming interfaces (APIs), etc.), an operating system of system 1050, one or more applications, and/or for carrying out the embodiments discussed herein. The computational logic 1083 may be stored or loaded into memory circuitry 1054 as instructions 1082, or data to create the instructions 1082, which are then accessed for execution by the processor circuitry 1052 to carry out the functions described herein. The processor circuitry 1052 and/or the acceleration circuitry 1064 accesses the memory circuitry 1054 and/or the storage circuitry 1058 over the interconnect (IX) 1056. The instructions 1082 direct the processor circuitry 1052 to perform a specific sequence or flow of actions, for example, as described with respect to flowchart(s) and block diagram(s) of operations and functionality depicted previously. The various elements may be implemented by assembler instructions supported by processor circuitry 1052 or high-level languages that may be compiled into instructions 1088, or data to create the instructions 1088, to be executed by the processor circuitry 1052. The permanent copy of the programming instructions may be placed into persistent storage devices of storage circuitry 1058 in the factory or in the field through, for example, a distribution medium (not shown), through a communication interface (e.g., from a distribution server (not shown)), over-the-air (OTA), or any combination thereof.

The IX 1056 couples the processor 1052 to communication circuitry 1066 for communications with other devices, such as a remote server (not shown) and the like. The communication circuitry 1066 is a hardware element, or collection of hardware elements, used to communicate over one or more networks 1063 and/or with other devices. In one example, communication circuitry 1066 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 1066 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 1056 also couples the processor 1052 to interface circuitry 1070 that is used to connect system 1050 with one or more external devices 1072. The external devices 1072 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 1050, which are referred to as input circuitry 1086 and output circuitry 1084. The input circuitry 1086 and output circuitry 1084 include one or more user interfaces designed to enable user interaction with the platform 1050 and/or peripheral component interfaces designed to enable peripheral component interaction with the platform 1050. Input circuitry 1086 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 1084 may be included to show information or otherwise convey information, such as sensor readings, actuator position(s), or other like information. Data and/or graphics may be displayed on one or more user interface components of the output circuitry 1084. Output circuitry 1084 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 1050. The output circuitry 1084 may also include speakers and/or other audio emitting devices, printer(s), and/or the like. Additionally or alternatively, sensor(s) may be used as the input circuitry 1084 (e.g., an image capture device, motion capture device, or the like) and one or more actuators may be used as the output device circuitry 1084 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 1050 may communicate over the IX 1056. The IX 1056 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 1056 may be a proprietary bus, for example, used in a SoC based system.

The number, capability, and/or capacity of the elements of system 1050 may vary, depending on whether computing system 1050 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 1050 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

## Claims

1. An apparatus, comprising:
a voltage regulator (350); and
a control circuit (110, 310) coupled to the voltage regulator (350), wherein the control circuit (110, 310) is to set a target voltage of the voltage regulator (350), to adjust a switching frequency of the voltage regulator (350) based on a difference between the target voltage and an output voltage of the voltage regulator (350) in a first control loop, and to monitor a load of the voltage regulator (350) and to adjust the target voltage based on a change in the load in a second control loop,
wherein the voltage regulator (350) is a switch capacitor type voltage regulator (350), and wherein the first control loop is decoupled from the second control loop.

2. The apparatus of claim 1,
wherein the first control loop is to monitor a local output voltage, and the second control loop is to monitor a remote output voltage.

3. The apparatus of any of claims 1 or 2,
wherein a clock rate of the first control loop is greater than a clock rate of the second control loop.

4. The apparatus of any of claims 1 to 3,
wherein to detect the change in the load, the circuit is to make a comparison of a representative voltage of the load to a reference voltage multiple times in a sampling cycle, and based on the comparison, obtain a count of a number of times the representative voltage of the load exceeds the reference voltage; if the count is above a tolerance window, the control circuit (110, 310) is to lower the target voltage; and if the count is below the tolerance window, the control circuit (110, 310) is to lower the target voltage.

5. An integrated circuit package, comprising:
a group of voltage regulators each being in accordance with any of the voltage regulators claimed in any of claims 1 to 4, and
wherein the group of voltage regulators is to power a compute domain (120), the control circuit (110, 310) to set an initial configuration of each voltage regulator of the group of voltage regulators, to detect an increase in a load for one or more of the voltage regulators and based on the detection of the increase in the load, adjust the one or more voltage regulators.

6. The integrated circuit package of claim 5,
wherein the initial configuration is common to each of the voltage regulators.

7. The integrated circuit package of claim 5 or 6,
wherein based on the detection of the increase in the load, the control circuit (110, 310) is to adjust the one or more voltage regulators to equalize loads of the voltage regulators.

8. The integrated circuit package of any of claims 5 to 7,
wherein the initial configuration comprises a reference clock frequency and to adjust the one or more voltage regulators, the control circuit (110, 310) is to adjust the reference clock frequency of the one or more voltage regulators.

9. The integrated circuit package of any of claims 5 to 8,
wherein the initial configuration comprises a voltage identification definition and to adjust the one or more voltage regulators, the control circuit (110, 310) is to adjust the voltage identification definition of the one or more voltage regulators.

10. The integrated circuit package of any of claims 5 to 9,
wherein to detect the increase in the load for the one or more of the voltage regulators, the control circuit (110, 310) is to detect a temperature of the one or more of the voltage regulators.

11. The integrated circuit package of any of claims 5 to 10,
wherein the control circuit (110, 310) is to adjust each voltage regulator of the group of voltage regulators independently of other voltage regulators of the group of voltage regulators.

12. The integrated circuit package of any of claims 5 to 11,
wherein the control circuit (110, 310) is to identify when one of the voltage regulators starts to provide more current than others of the voltage regulators and to reduce at least one of a target voltage or a reference frequency of the one of the voltage regulators.

13. The integrated circuit package of any of claims 5 to 12,
wherein the control circuit (110, 310) includes two or more separate control circuits (110, 310) to control the group of voltage regulators.

14. The integrated circuit package of any of claims 5 to 13,
wherein the voltage regulators are at least partially disposed on two or more dies within the integrated circuit package.

## Patentansprüche

1. Vorrichtung, umfassend:
einen Spannungsregler (350); und
eine Steuerschaltung (110, 310), die mit dem Spannungsregler (350) gekoppelt ist, wobei die Steuerschaltung (110, 310) geeignet ist, um eine Zielspannung des Spannungsreglers (350) einzustellen, um eine Schaltfrequenz des Spannungsreglers (350) basierend auf einer Differenz zwischen der Zielspannung und einer Ausgangsspannung des Spannungsreglers (350) in einer ersten Regelschleife anzupassen, und um eine Last des Spannungsreglers (350) zu überwachen und um die Zielspannung basierend auf einer Änderung der Last in einer zweiten Regelschleife anzupassen,
wobei der Spannungsregler (350) ein Spannungsregler vom Schaltkondensatortyp (350) ist und wobei die erste Regelschleife von der zweiten Regelschleife entkoppelt ist.

2. Vorrichtung nach Anspruch 1,
wobei die erste Regelschleife geeignet ist, um eine lokale Ausgangsspannung zu überwachen, und die zweite Regelschleife geeignet ist, um eine ferne Ausgangsspannung zu überwachen.

3. Vorrichtung nach einem der Ansprüche 1 oder 2, wobei eine Taktrate der ersten Regelschleife größer als eine Taktrate der zweiten Regelschleife ist.

4. Vorrichtung nach einem der Ansprüche 1 bis 3, wobei die Schaltung zum Erkennen der Änderung der Last geeignet ist, um einen Vergleich einer repräsentativen Spannung der Last mit einer Referenzspannung mehrfach in einem Abtastzyklus durchzuführen, und wobei sie geeignet ist, um, basierend auf dem Vergleich, eine Zählung einer Anzahl von Malen zu erhalten, bei denen die repräsentative Spannung der Last die Referenzspannung überschreitet; wobei, wenn die Zählung über einem Toleranzfenster liegt, die Steuerschaltung (110, 310) geeignet ist, um die Zielspannung zu senken; und wenn die Zählung unter dem Toleranzfenster liegt, die Steuerschaltung (110, 310) geeignet ist, um die Zielspannung zu senken.

5. Gehäuse für eine integrierte Schaltung, umfassend:
eine Gruppe von Spannungsreglern, die jeweils einem der Spannungsregler nach einem der Ansprüche 1 bis 4 entsprechen, und
wobei die Gruppe von Spannungsreglern geeignet ist, um einen Rechenbereich (120) mit Strom zu versorgen, wobei die Steuerschaltung (110, 310) geeignet ist, um eine anfängliche Konfiguration von jedem Spannungsregler aus der Gruppe von Spannungsreglern einzustellen, um eine Zunahme einer Last für einen oder mehrere der Spannungsregler zu erkennen und um, basierend auf dem Erkennen der Zunahme der Last, den einen oder die mehreren Spannungsregler anzupassen.

6. Gehäuse für eine integrierte Schaltung nach Anspruch 5,
wobei die anfängliche Konfiguration für jeden der Spannungsregler die gleiche ist.

7. Gehäuse für eine integrierte Schaltung nach Anspruch 5 oder 6,
wobei die Steuerschaltung (110, 310), basierend auf dem Erkennen der Zunahme der Last, geeignet ist, um den einen oder die mehreren Spannungsregler anzupassen, um die Lasten der Spannungsregler auszugleichen.

8. Gehäuse für eine integrierte Schaltung nach einem der Ansprüche 5 bis 7,
wobei die anfängliche Konfiguration eine Referenztaktfrequenz umfasst und die Steuerschaltung (110, 310) zum Anpassen des einen oder der mehreren Spannungsregler geeignet ist, um die Referenztaktfrequenz des einen oder der mehreren Spannungsregler anzupassen.

9. Gehäuse für eine integrierte Schaltung nach einem der Ansprüche 5 bis 8,
wobei die anfängliche Konfiguration eine Spannungsidentifizierungsdefinition umfasst und die Steuerschaltung (110, 310) zum Anpassen des einen oder der mehreren Spannungsregler geeignet ist, um die Spannungsidentifizierungsdefinition des einen oder der mehreren Spannungsregler anzupassen.

10. Gehäuse für eine integrierte Schaltung nach einem der Ansprüche 5 bis 9,
wobei die Steuerschaltung (110, 310) zum Erkennen der Zunahme der Last für den einen oder die mehreren der Spannungsregler geeignet ist, um eine Temperatur des einen oder der mehreren der Spannungsregler zu erkennen.

11. Gehäuse für eine integrierte Schaltung nach einem der Ansprüche 5 bis 10,
wobei die Steuerschaltung (110, 310) geeignet ist, um jeden Spannungsregler aus der Gruppe von Spannungsreglern unabhängig von anderen Spannungsreglern aus der Gruppe von Spannungsreglern anzupassen.

12. Gehäuse für eine integrierte Schaltung nach einem der Ansprüche 5 bis 11,
wobei die Steuerschaltung (110, 310) geeignet ist, um zu identifizieren, wann einer der Spannungsregler beginnt, mehr Strom als andere der Spannungsregler bereitzustellen, und um mindestens eine von einer Zielspannung und/oder einer Referenzfrequenz des einen der Spannungsregler zu reduzieren.

13. Gehäuse für eine integrierte Schaltung nach einem der Ansprüche 5 bis 12,
wobei die Steuerschaltung (110, 310) zwei oder mehr separate Steuerschaltungen (110, 310) aufweist, die geeignet sind, um die Gruppe von Spannungsreglern zu steuern.

14. Gehäuse für eine integrierte Schaltung nach einem der Ansprüche 5 bis 13,
wobei die Spannungsregler zumindest teilweise auf zwei oder mehr Dies innerhalb des Gehäuses für eine integrierte Schaltung angeordnet sind.

## Revendications

1. Appareil, comprenant :
un régulateur de tension (350) ; et
un circuit de commande (110, 310) couplé au régulateur de tension (350), dans lequel le circuit de commande (110, 310) doit fixer une tension cible du régulateur de tension (350), pour ajuster une fréquence de commutation du régulateur de tension (350) sur la base d'une différence entre la tension cible et une tension de sortie du régulateur de tension (350) dans une première boucle de commande, et de surveiller une charge du régulateur de tension (350) et d'ajuster la tension cible en fonction d'une variation de la charge dans une deuxième boucle de commande,
dans lequel le régulateur de tension (350) est un régulateur de tension (350) du type condensateur de commutation, et dans lequel la première boucle de commande est découplée de la seconde boucle de commande.

2. Appareil selon la revendication 1,
dans lequel la première boucle de commande est destinée à surveiller une tension de sortie locale, et la deuxième boucle de commande est destinée à surveiller une tension de sortie à distance.

3. Appareil selon l'une quelconque des revendications 1 ou 2,
dans lequel une fréquence d'horloge de la première boucle de commande est supérieure à une fréquence d'horloge de la deuxième boucle de commande.

4. Appareil selon l'une quelconque des revendications 1 à 3,
dans lequel pour détecter le variation de la charge, le circuit doit effectuer une comparaison d'une tension représentative de la charge à une tension de référence plusieurs fois au cours d'un cycle d'échantillonnage, et sur la base de la comparaison, obtenir un comptage d'un nombre de fois que la tension représentative de la charge dépasse la tension de référence ; si le comptage est supérieur à une fenêtre de tolérance, le circuit de contrôle (110, 310) doit baisser la tension cible ; et si le comptage est inférieur à la fenêtre de tolérance, le circuit de commande (110, 310) doit abaisser la tension cible.

5. Boîtier de circuit intégré, comprenant :
un groupe de régulateurs de tension, chacun étant conforme à l'un quelconque des régulateurs de tension selon l'une quelconque des revendications 1 à 4, et
dans lequel le groupe de régulateurs de tension est destiné à alimenter un domaine de calcul (120), le circuit de commande (110, 310) doit établir une configuration initiale de chaque régulateur de tension du groupe de régulateurs de tension, pour détecter une augmentation d'une charge pour un ou plusieurs des régulateurs de tension et, sur la base de la détection de l'augmentation de la charge, ajuster le ou les régulateurs de tension.

6. Boîtier de circuit intégré selon la revendication 5,
dans lequel la configuration initiale est commune à chacun des régulateurs de tension.

7. Boîtier de circuit intégré selon la revendication 5 ou 6,
dans lequel, à partir de la détection de l'augmentation de la charge, le circuit de commande (110, 310) doit ajuster le ou les régulateurs de tension pour égaliser les charges des régulateurs de tension.

8. Boîtier de circuit intégré selon l'une quelconque des revendications 5 à 7,
dans lequel la configuration initiale comprend une fréquence d'horloge de référence et, pour ajuster le ou les régulateurs de tension, le circuit de commande (110, 310) doit ajuster la fréquence d'horloge de référence du ou des régulateurs de tension.

9. Boîtier de circuit intégré selon l'une quelconque des revendications 5 à 8,
dans lequel la configuration initiale comprend une définition d'identification de tension et, pour ajuster le ou les régulateurs de tension, le circuit de commande (110, 310) est destiné à ajuster la définition d'identification de tension du ou des régulateurs de tension.

10. Boîtier de circuit intégré selon l'une quelconque des revendications 5 à 9,
dans lequel, pour détecter l'augmentation de la charge pour le ou les régulateurs de tension, le circuit de commande (110, 310) doit détecter une température du ou des régulateurs de tension.

11. Boîtier de circuit intégré selon l'une quelconque des revendications 5 à 10,
dans lequel le circuit de commande (110, 310) doit ajuster chaque régulateur de tension du groupe de régulateurs de tension indépendamment des autres régulateurs de tension du groupe de régulateurs de tension.

12. Boîtier de circuit intégré selon l'une quelconque des revendications 5 à 11,
dans lequel le circuit de commande (110, 310) est destiné à identifier quand l'un des régulateurs de tension commence à fournir plus de courant que d'autres des régulateurs de tension et à réduire au moins l'une d'une tension cible ou d'une fréquence de référence dudit régulateur de tension.

13. Boîtier de circuit intégré selon l'une quelconque des revendications 5 à 12,
dans lequel le circuit de commande (110, 310) comprend deux circuits de commande distincts (110, 310) ou plus pour commander le groupe de régulateurs de tension.

14. Boîtier de circuit intégré selon l'une quelconque des revendications 5 à 13,
dans lequel les régulateurs de tension sont au moins partiellement disposés sur deux puces ou plus à l'intérieur du boîtier de circuit intégré.
